# EUROPÄISCHE PATENTSCHRIFT

(11) **EP 3 083 472 B1**
(45) Veröffentlichungstag und Bekanntmachung des Hinweises auf die Patenterteilung: **03.01.2018**
(21) Anmeldenummer: 14800037.5
(22) Anmeldetag: 18.11.2014
(51) Int. Cl.: B66B 5/00, B66B 5/20

(54) **BREMSE FÜR AUFZUGSANLAGEN**
BRAKE FOR ELEVATORS
FREIN POUR ASCENSEURS

(30) Priorität: 16.12.2013 EP 13197453
(43) Veröffentlichungstag der Anmeldung: 26.10.2016
(73) Patentinhaber: Inventio AG, 6052 Hergiswil (CH)
(72) Erfinder: OSMANBASIC, Faruk, CH-5643 Sins (CH); MEIERHANS, Daniel, CH-5643 Sins (CH)
(86) Internationale Anmeldenummer: PCT/EP2014/074909
(87) Internationale Veröffentlichungsnummer: WO 2015/090800

(56) Entgegenhaltungen:
- EP-A1- 0 899 231
- DE-C1- 19 852 040
- FR-A- 1 278 304
- US-A- 5 233 139

## Beschreibung

Die Erfindung betrifft ein Verfahren zur Bestimmung eines Bremswegs einer Bremseinheit beziehungsweise einer Aufzugskabine, die von der Bremseinheit abgebremst wird.

Aus der EP 0 899 231 A1 ist eine Bremsfangvorrichtung für Aufzüge bekannt. Die bekannte Bremsfangvorrichtung weist eine Konsole auf, die eine Führungsschiene für eine Aufzugskabine umgreift und in Querrichtung zu der Führungsschiene angeordnet ist. Ferner sind zwei zu beiden Seiten der Führungsschiene angeordnete Bremsbacken vorgesehen, die sich an der Konsole abstützen. Eine der Bremsbacken dient als aktive Bremsbacke. Die andere Bremsbacke dient als passive Bremsbacke. Hierbei stützt sich die aktive Bremsbacke über einen Arbeitsexzenter ab, der drehfest mit einer Abrollscheibe verbunden ist. Die Abrollscheibe und der Arbeitsexzenter sind um einen gemeinsamen Drehzapfen drehbar. Hierbei bilden die Abrollscheibe und der Arbeitsexzenter zusammen ein zusammengehörendes Bestätigungselement. Wenn eine Auslösung erfolgt ist, dann wird die Abrollscheibe durch eine Anfangsdrehung mit der Führungsschiene in Reibkontakt gebracht und dadurch die Abrollscheibe durch die noch fahrende Aufzugskabine weiter gedreht. Dadurch wird die ganze Bremsfangvorrichtung so gezogen, dass die passive Bremsbacke in Berührung mit der Führungsschiene kommt. Durch weiteres Abrollen der Abrollscheibe wird über den Arbeitsexzenter auch die aktive Bremsbacke an die Führungsschiene herangeführt. Nach dem Stillstand der Aufzugskabine kann die eingerückte Fangvorrichtung durch ein entgegengesetztes Bewegen der Aufzugskabine und dadurch erfolgendes Zurückdrehen der Abrollscheibe wieder gelöst werden.

Beim Einsatz einer Fangvorrichtung (Bremsfangvorrichtung) für Aufzugsanlagen, wie sie beispielsweise aus der EP 0 899 231 A1 bekannt ist, ergeben sich folgende Probleme. Für einen zuverlässigen Betrieb im Rahmen von gesetzlichen Bestimmungen oder sonstigen Vorgaben ist bei der ersten Inbetriebnahme und gegebenenfalls auch zu regelmässig oder einzeln bestimmten Zeitpunkten, wie beispielsweise bei einer regelmässigen Wartung beziehungsweise nach einer Notbremsung, in der Regel eine Einstellung und Prüfung der Fangvorrichtung erforderlich. Im Rahmen solch einer Prüfung und Einstellung ist die Bestimmung eines Bremswegs bei einem Testlauf von wesentlicher Bedeutung. Bei solch einem Testlauf können beispielsweise eine bestimmte Beladung und eine bestimmte Geschwindigkeit der Aufzugskabine im Moment der Auslösung der Fangvorrichtung vorgegeben sein. Durch das Anpressen der Bremsbacken an die Führungsschienen entstehen Schleifspuren auf den Führungsschienen, welche prinzipiell ausgemessen werden können. Es zeigt sich jedoch, dass solche Brems- beziehungsweise Schleifspuren in der Praxis oft schlecht sichtbar sind. Vor allem sind der genaue Startpunkt und Endpunkt oft schwierig zu erkennen. Eine vermeintliche Möglichkeit besteht darin, die Führungsschienen im relevanten Bereich einzufärben, um deutlichere Spuren zu erzeugen. Allerdings beeinflusst dann die verwendete Farbe das Reibverhalten und somit den Bremsweg. Somit haben die genannten Verfahren beziehungsweise Methoden den gemeinsamen Nachteil, dass der ermittelte Bremsweg mit einer grossen Ungenauigkeit beziehungsweise einem grossen Messfehler behaftet ist oder dass sogar eine Funktion der Bremse beeinflusst werden kann. US 5 233 139 A offenbart ein weiteres Verfahren zur Bestimmung eines Bremswegs. Aufgabe der Erfindung ist es, ein Verfahren zur Bestimmung eines Bremswegs anzugeben, das verbessert ausgestaltet ist und mit dem insbesondere die genannten Nachteile überwunden werden können. Speziell ist es eine Aufgabe der Erfindung, ein Verfahren anzugeben, das eine verbesserte Bestimmung eines Bremswegs einer Bremseinheit einer Fangvorrichtung beziehungsweise einer Aufzugskabine der Aufzugsanlage zumindest im Rahmen eines Testlaufs oder dergleichen ermöglicht.
Im Folgenden sind Lösungen und Vorschläge für ein entsprechendes Verfahren vorgestellt, welches zumindest Teile der gestellten Aufgabe löst. Des Weiteren sind vorteilhafte ergänzende oder alternative Weiterbildungen und Ausgestaltungen angegeben.
Die Abrollbahn und/oder die Bremsbahn können an einer Führungsschiene oder auch an einer speziellen Schiene, insbesondere Bremsschiene, vorgesehen sein. Solch eine Führungsschiene, beziehungsweise Schiene, und somit auch begrifflich die Abrollbahn und/oder die Bremsbahn ist kein Bestandteil der Bremseinheit. Ein Fangvorrichtungssystem kann mehrere Bremseinheiten umfassen, von denen eine oder mehrere Bremseinheiten mit Markierungselementen versehen sind. Dies schliesst auch die Möglichkeit ein, dass das Fangvorrichtungssystem mehrere Bremseinheiten aufweist, von denen nur ein Teil, insbesondere eine, auf erfindungsgemässe Weise mit einem Markierungselement ausgestaltet ist, während die anderen Bremseinheiten ohne solch ein Markierungselement ausgestaltet sind und nur ihren Teil zum Bremsvorgang beitragen. Eine redundante Auslegung ist auch deshalb nicht erforderlich, weil die Bremswegbestimmung in der Regel nur für den Testlauf oder dergleichen benötigt wird und eine Fehlfunktion hier leicht erkannt werden kann. Deshalb besteht auch die Möglichkeit, die Bremseinheit je nach konkreter Ausgestaltung gegebenenfalls auch mit einem entfernbaren Markierungselement auszustatten, der nach dem erfolgreichen Testlauf und der Einstellung der Fangvorrichtung von einer autorisierten Person, insbesondere einem Installateur oder Servicetechniker, entfernt wird. Speziell das erfindungsgemässe Verfahren kann deshalb gegebenenfalls auch mit einem entfernbaren Markierungselement durchgeführt werden. Dies ist in der Regel nur sinnvoll, wenn das Markierungselement ausschliesslich nur eine Anfangs- und Endmarkierung erzeugt, da bei dieser Ausführung das Markierungselement keinen Einfluss auf die eigentliche Bremsung hat.

Durch das Markierungselement wird beim Abrollen eines Abrollelements an der Abrollbahn zumindest eine Anfangsmarkierung auf der Abrollbahn und/oder der Bremsbahn verursacht beziehungsweise erzeugt. Hierbei kann das Markierungselement jedoch auch eine Reihe von Markierungen auf der Abrollbahn und/oder der Bremsbahn erzeugen. Dies ist insbesondere dann der Fall, wenn das Markierungselement an dem Bremsbelag angeordnet ist, wodurch sich beim Anlegen des Bremsbelags an die Bremsbahn eine Markierungslinie auf der Bremsbahn ergibt, deren Anfang die Anfangsmarkierung darstellt. Das Abrollelement kann auch als Abrollkurve bezeichnet sein. Es ist zumindest über einen Teilbereich kurvenförmig oder abgerundet ausgestaltet, so dass sich bei Verschwenken des Abrollelements eine Klemmwirkung auf die Abrollbahn beziehungsweise die Führungsschiene ergibt.

Ferner ist es vorteilhaft, dass das Markierungselement bei einem Rückrollen des Abrollelements, bei dem das Zusammenwirken des Bremsbelags mit der ortsfesten Bremsbahn aufgehoben wird, zumindest eine Endmarkierung auf der Abrollbahn und/oder der Bremsbahn erzeugt beziehungsweise verursacht. Wenn das Markierungselement eine Markierungslinie erzeugt, dann stellt das Ende der Markierungslinie die Endmarkierung dar.

Allerdings kann die Anfangsmarkierung und gegebenenfalls die Endmarkierung auch als Markierungsstelle auf der Abrollbahn und/oder der Bremsbahn erzeugt sein. Die Markierungsstellen können hierbei auf unterschiedliche Weise erzeugt und somit kenntlich gemacht werden. Unter einer Markierungsstelle ist hierbei eine Markierung zu verstehen, die in einem örtlich begrenzten Bereich der Abrollbahn und/oder der Bremsbahn ausgestaltet ist und somit gut als Anfangsmarkierung beziehungsweise Endmarkierung zum Messen der dazwischen liegenden Distanz geeignet ist.

Je nach Anwendungsfall kann gegebenenfalls auch das Erzeugen einer Anfangsmarkierung auf der Abrollbahn und/oder der Bremsbahn ausreichen. Beispielsweise kann ausgehend von der Anfangsmarkierung ein Abstand zu einem bestimmten Teil der Bremseinheit der dann stehenden Fangvorrichtung gemessen werden. Dieser Abstand stellt, wie die Distanz zwischen der Anfangsmarkierung und der Endmarkierung, ein Mass dar aus dem sich der Bremsweg bestimmen lässt. Zur Bestimmung des Bremswegs kann ein linearer oder nicht linearer Zusammenhang genutzt werden, der über einen Umrechnungsfaktor, eine Tabelle oder dergleichen beschreibbar ist. In der Regel entspricht der Bremsweg der ermittelten kürzesten Distanz zwischen der Anfangsmarkierung und der Endmarkierung zu- oder abzüglich eines Korrekturwerts, der sich aus der Anordnung des Markierungselements auf dem Abrollelement sowie der geometrischen Ausgestaltung der Bremse ergibt. Vorzugsweise wird dieser Korrekturwert mittels einer Versuchsreihe ermittelt oder verifiziert.

Somit kann das Markierungselement in vorteilhafter Weise je nach Anwendungsfall an dem Bremsbelag oder in bevorzugter Weise an dem Abrollelement beziehungsweise an einer Abrollscheibe, an der das Abrollelement ausgestaltet ist, angeordnet sein. Ferner kann das Markierungselement je nach Anwendungsfall in vorteilhafter Weise koppelbar, unlösbar oder lösbar mit dem Bremsbelag oder der Abrollscheibe verbunden sein.

Alternativ kann die Anfangsmarkierung und gegebenenfalls auch die Endmarkierung eine elektronische Markierung sein. Hierbei beinhaltet beispielsweise das Abrollelement einen druckbasierten Signalgeber, der bei überrollen desselben ein Signal ausgibt. Dies kann beispielsweise ein Piezoelement sein. Eine Position der Aufzugskabine wird bei Auftreten dieses Signals erfasst und als Anfangsmarkierung beziehungswiese beim Rückrollen als Endmarkierung ausgegeben oder gespeichert. Die Position kann dabei von einem im Aufzug vorhandenen Positionssystem bereitgestellt sein. Bei dieser Lösung muss anschliessend eine Distanz zwischen Anfangsmarkierung und Endmarkierung nicht mehr manuell gemessen werde, sondern sie kann direkt anhand der gespeicherten Positionsdaten der Aufzugskabine ermittelt werden.

Der Werkstoff für das Markierungselement kann in vorteilhafter Weise in Bezug auf den jeweiligen Anwendungsfall gewählt sein. Für den Bremsbelag kann beispielsweise ein weichmetallischer Werkstoff zum Einsatz kommen. Speziell kann für den Bremsbelag Messing oder ein auf Messing basierender Werkstoff zum Einsatz kommen. Das Markierungselement kann dann beispielsweise aus einem hartmetallischen Werkstoff oder einem keramischen Werkstoff gebildet sein, der einen tieferen Eindruck, insbesondere eine tiefere Rille, in der Führungsschiene hinterlässt. Vorteilhaft ist insbesondere die Kombination, dass der Reibbelag aus Messing gebildet ist und dass das Markierungselement als gehärteter Kegel ausgestaltet ist. Bei einer abgewandelten Ausgestaltung kann der Reibbelag allerdings auch aus einem hartmetallischem Werkstoff, insbesondere einem gehärteten Stahl, gebildet sein.

Vorteilhaft ist es hierbei ferner, dass das Markierungselement eine Spitze, insbesondere eine Kegelspitze, aufweist, die zumindest beim Erzeugen der Anfangsmarkierung beziehungsweise der Endmarkierung und gegebenenfalls auch beim Erzeugen einer Markierungslinie der Abrollbahn und/oder der Bremsbahn zugewandt ist. Das Markierungselement kann auch aus mehreren Werkstoffen gebildet sein. Insbesondere kann die Kegelspitze auch aus einem metallischen Werkstoff mit einer keramischen Beschichtung gebildet sein.

Wenn das Markierungselement an dem Abrollelement vorgesehen ist, dann kann das Markierungselement in vorteilhafter Weise durch zumindest eine Aussparung in dem Abrollelement ausgestaltet sein. Hierbei kann das Markierungselement durch eine Bohrung im Abrollelement ausgestaltet sein. Dass von dem Abrollelement beim Abrollen an der Abrollbahn erzeugte Muster auf der Abrollbahn weist dann eine freibleibende Stelle auf, die von der Aussparung im Abrollelement herrührt. Diese Markierungsstelle ist somit gut zu erkennen. Speziell können auf diese Weise die Anfangsmarkierung und die Endmarkierung als Markierungsstellen erzeugt werden. Der Abstand zwischen der Anfangsmarkierung und der Endmarkierung kann dann leicht von der autorisierten Person gemessen werden.

In entsprechender Weise kann das Markierungselement auch durch eine erste seitliche Aussparung am Abrollelement und eine zweite seitliche Aussparung am Abrollelement, zwischen denen ein verjüngter Abschnitt des Abrollelements ausgestaltet ist, ausgebildet sein. Hierdurch ergibt sich eine Unterbrechung des charakteristischen Musters, das beim Abrollen des Abrollelements auf der Abrollbahn entsteht. Der verjüngte Abschnitt des Abrollelements kann insbesondere als stegförmiger Abschnitt des Abrollelements ausgestaltet sein. Auf diese Weise können Markierungsstellen, nämlich die Anfangsmarkierung und die Endmarkierung, auf der Abrollbahn erzeugt werden.

Bei der Ausgestaltung der Bremseinheit ist vorzugsweise eine aktive Bremsbacke auf einer exzentrischen Achse gelagert, wobei die exzentrische Achse beim Abrollen beziehungsweise Rückrollen des Abrollelements die Bremsbacke zunehmend beziehungsweise abnehmend gegen die Bremsbahn presst. Somit kann beim Abrollen des Abrollelements an der Abrollbahn die Bremskraft zunächst zunehmen, da die Bremsbacke zunehmend gegen die Bremsbahn gepresst wird. Hierdurch ist eine progressive Bremskraftentfaltung möglich. Zum Lösen erfolgt ein Rückrollen des Abrollelements, wobei beim Rückrollen des Abrollelements die Bremsbacke abnehmend gegen die Bremsbahn gepresst wird. Beim Rückrollen des Abrollelements besteht also noch eine gewisse Andruckkraft der Abrollscheibe an die Abrollbahn und der Bremsbacke an die Bremsbahn. Je nachdem, ob das Markierungselement am Abrollelement oder dem Bremsbelag vorgesehen ist, ergibt sich somit noch eine ausreichende Andruckkraft, um die Endmarkierung zuverlässig auf der Abrollbahn und/oder Bremsbahn zu erzeugen. Bei einer Anordnung des Markierungselements an dem Abrollelement ist dieses derart angeordnet, dass durch die Pressung des Abrollelements an die Abroll- oder Bremsbahn ein deutliches Muster in diese geprägt wird.

Bei der Ausgestaltung der Bremseinheit ergibt sich in der Regel ein Aufbau, der mit einem Überlappen der Abrollbahn und der Bremsbahn korrespondiert. Dies ermöglicht eine kompakte Ausgestaltung und eine vorteilhafte Kraftübertragung. Allerdings können hierbei die charakteristischen Strukturen, insbesondere Rillen, die beim Abrollen des Abrollelements an der Abrollbahn entstehen, von dem Bremsbelag ebenfalls überstrichen und somit geglättet, verändert und/oder überlagert werden. Das Bild des Gesamtvorgangs zeigt sich daher gewissermassen in Form von Rillen oder dergleichen, die vom Abrollen des Abrollelements an der Abrollbahn erzeugt und vom Zusammenwirken der Bremsbacke mit der Bremsbahn verwischt sind. Hierbei sind speziell der Anfang und das Ende der charakteristischen Rillenstruktur, die vom Abrollen des Abrollelements an der Abrollbahn erzeugt ist, in der Regel nicht mehr genau erkennbar. Über die von dem Markierungselement erzeugten Anfangs- und Endmarkierungen kann jedoch ein Abstand bestimmt werden, der ein Mass für den Bremsweg ist. Der exakte Anfang und das exakte Ende der charakteristischen Rillenstruktur, die vom Abrollen des Abrollelements an der Abrollbahn erzeugt ist, müssen dann nicht mehr bestimmt werden. Somit wird die diesbezügliche Ungenauigkeit aus der Bestimmung des Bremswegs eliminiert.

Somit kann eine Bestimmung des Bremswegs der Bremseinheit der Fangvorrichtung für Aufzugsanlagen durchgeführt werden. Das Verfahren kann hierbei in entsprechender Weise vorteilhaft weitergebildet werden.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Fig. 1:: eine Aufzugsanlage mit einer Fangvorrichtung, die zumindest eine Bremseinheit umfasst, in einer auszugsweisen, schematischen Darstellung entsprechend einem ersten Ausführungsbeispiel der Erfindung;
- Fig. 2:: die Bremseinheit und eine Schiene der in Fig. 1 dargestellten Aufzugsanlage des ersten Ausführungsbeispiels der Erfindung in einer auszugsweisen, schematischen Darstellung im gelösten Zustand,
- Fig. 3:: die in Fig. 2 dargestellte Bremseinheit gemäss dem ersten Ausführungsbeispiel der Erfindung in einer auszugsweisen, schematischen Darstellung während einer Auslösung der Fangvorrichtung;
- Fig. 4:: die in Fig. 2 dargestellte Schiene mit einem charakteristischen Rillenmuster, das bei einer Auslösung und einem anschliessenden Lösen der Fangvorrichtung auf der Schiene entsteht, in einer idealisierten Darstellung;
- Fig. 5:: die in Fig. 2 dargestellte Schiene mit dem charakteristischen Rillenmuster, das beim Auslösen und anschliessendem Lösen der Fangvorrichtung auf der Schiene entsteht, in einer schematischen, aber realitätsnäheren Darstellung;
- Fig. 6:: die in Fig. 2 dargestellte Bremseinheit in einer auszugsweisen, schematischen Darstellung entsprechend einem zweiten Ausführungsbeispiel der Erfindung;
- Fig. 7:: die in Fig. 2 dargestellte Schiene mit einem charakteristischen Rillenmuster, das beim Auslösen und anschliessendem Lösen der Fangvorrichtung gemäss dem zweiten Ausführungsbeispiel auf der Schiene entsteht, in einer idealisierten Darstellung;
- Fig. 8:: die in Fig. 2 dargestellte Schiene mit dem charakteristischen Rillenmuster, das beim Auslösen und anschliessendem Lösen der Fangvorrichtung gemäss dem zweiten Ausführungsbeispiel auf der Schiene entsteht, in einer schematischen, aber realitätsnäheren Darstellung;
- Fig. 9:: eine Bremsbacke einer Bremseinheit gemäss einem dritten Ausführungsbeispiel der Erfindung in einer auszugsweisen, schematischen Schnittdarstellung; und
- Fig. 10:: die in Fig. 2 dargestellte Schiene mit einem charakteristischen Rillenmuster, das beim Auslösen und anschliessendem Lösen der Fangvorrichtung gemäss dem dritten Ausführungsbeispiel auf der Schiene entsteht, in einer idealisierten Darstellung.

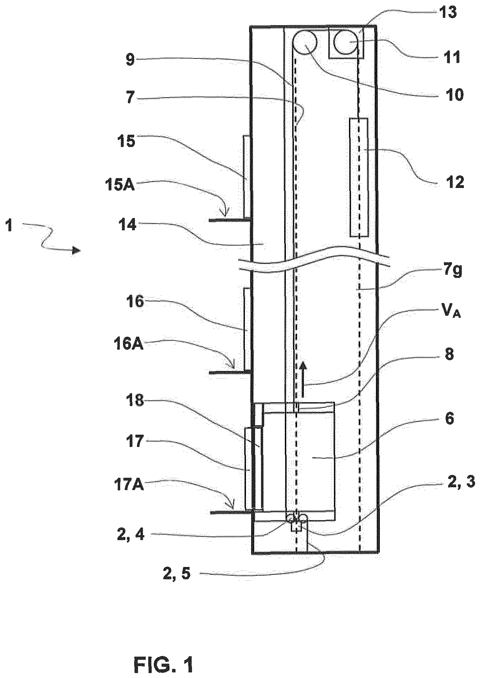

Fig. 1 zeigt eine Aufzugsanlage 1 mit einer Fangvorrichtung 2, die zumindest eine Bremseinheit 3, eine Auslöseeinrichtung 4 und ein Auslöseseil 5 umfasst, in einer auszugsweisen, schematischen Darstellung entsprechend einem ersten Ausführungsbeispiel.

Die Aufzugsanlage 1 weist eine Aufzugskabine 6 auf. Die Aufzugskabine 6 dient zum Aufnehmen von Personen und/oder Sachen. Hierdurch kann eine Beförderung von Personen, Gepäckstücken und dergleichen oder auch eine als Lastenaufzug 1 dienende Aufzugsanlage 1, die beispielsweise zum Transport von Gütern dient, realisiert werden.

Die Bremseinheit 3 der Fangvorrichtung 2 wirkt mit einer Schiene 7 zusammen. Die Schiene 7 ist in der Fig. 1 schematisch durch eine unterbrochen dargestellte Linie veranschaulicht. Die Aufzugskabine 6 ist in diesem Ausführungsbeispiel mittels Führungsschuhen 8 ebenfalls an der Schiene 7 beziehungsweise entlang der Schiene 7 geführt. Die Schiene 7 ist in diesem Ausführungsbeispiel somit als Brems- und Führungsschiene 7 ausgebildet.

Bei einer abgewandelten Ausgestaltung kann die Schiene 7, die mit der Bremseinheit 3 der Fangvorrichtung 2 zusammen wirkt, auch als reine Bremsschiene 7 ausgebildet sein. Für die Führung der Aufzugskabine 6 kann dann eine separate Führungsschiene vorgesehen sein, um die Aufzugskabine 6 mittels der Führungsschuhe 8 an der separaten Führungsschiene zu führen. Ausserdem sind zur Vereinfachung der Darstellung nur eine Bremseinheit 3 und nur eine Schiene 7 dargestellt. In der Praxis ist die Aufzugskabine 6 an zumindest zwei Schienen geführt, wobei es sich bei einer dieser Schienen um die Schiene 7 handeln kann. Ferner kann auch eine entsprechend der Schiene 7 ausgestaltete weitere Schiene vorgesehen sein, die mit einer weiteren Bremseinheit, die entsprechend der Bremseinheit 3 ausgestaltet ist, zusammen wirkt. Ferner ist es auch möglich, dass die Fangvorrichtung 2 eine weitere Bremseinheit aufweist, die zusammen mit der Bremseinheit 3 mit der Schiene 7 zusammen wirkt. Somit kann die Fangvorrichtung 2 eine geeignete Anzahl an Bremseinheiten, die die Bremseinheit 3 umfassen, aufweisen. Speziell kann die Fangvorrichtung 2 zwei Bremseinheiten aufweisen, von denen eine die Bremseinheit 3 ist, die mit zwei Schienen zusammen wirken, von denen eine die Schiene 7 ist.

Die Aufzugskabine 6 ist an einem Tragmittel 9 aufgehängt. Das Tragmittel 9 ist über eine Umlenkrolle 10 und eine Treibscheine 11 geführt und andererseits mit einem Gegengewicht 12 verbunden. Das Gegengewicht ist ebenso entlang von Gegengewichtsschienen 7g geführt. Die Treibscheibe 11 wird von einer Antriebsmaschineneinheit 13 angetrieben, um die Aufzugskabine 6 in einem Aufzugsschacht 14 zu verfahren. In diesem Ausführungsbeispiel ist die Antriebsmaschineneinheit 13 in dem Aufzugsschacht 14 angeordnet. Bei einer abgewandelten Ausgestaltung können die Umlenkrolle 10, die Antriebsmaschineneinheit 13 und die Treibscheibe 11 aber auch in einem separaten Maschinenraum untergebracht sein.

Ferner sind einzelne Schachttüren 15, 16, 17 vorgesehen, die einer Kabinentür 18 der Aufzugskabine 6 zugeordnet sind, wenn die Aufzugskabine 6 an dem jeweiligen Stockwerk 15A, 16A, 17A hält.

Das Tragmittel 9 dient in diesem Ausführungsbeispiel zugleich als Zugmittel 9, um sowohl die Gewichtskraft der Aufzugskabine 6 aufzunehmen als auch die von der Treibscheibe 11 auf das Tragmittel 9 übertragenen Antriebskräfte der Antriebsmaschineneinheit 13 auf die Aufzugskabine 6 zu übertragen. Dies gilt entsprechend für das Gegengewicht 12. Das Auslöseseil 5 ist unabhängig von dem Tragmittel 9. Das Auslöseseil 5 ist in diesem Ausführungsbeispiel ortsfest in dem Aufzugschacht 14 angeordnet. Bei einer abgewandelten Ausgestaltung kann das Auslöseseil 5 allerdings auch bewegbar sein. Speziell kann das Auslöseseil 5 über geeignete Rollen geführt sein, wobei über eine Verbindung des Auslöseseils 5 mit der Aufzugskabine 6 eine Bewegung eines geschlossenen Umlaufs des Auslöseseils 5 möglich ist. In beiden Fällen kann aus einer Relativbewegung des Auslöseseils 5 oder eines Teils des Auslöseseils 5 relativ zu der Aufzugskabine 6 oder relativ zum Schacht 14 (bei bewegbar angeordnetem Auslöse- beziehungsweise Geschwindigkeitsbegrenzerseil 5) eine Geschwindigkeit v_{A} bestimmt werden. Die Auslöseeinrichtung 4 kann dann die Fangvorrichtung 2 auslösen, wenn die Geschwindigkeit v_{A} der Aufzugskabine 6 eine vorgegebene Grenzgeschwindigkeit v_{G} überschreitet. Zusätzlich oder alternativ können auch andere Vorgaben zur Auslösung der Fangvorrichtung 2 realisiert werden, wenn die Auslöseeinrichtung 4 entsprechend abgewandelt ausgestaltet ist. Beispielsweise kann ein elektronischer Begrenzer, der Fahrbewegungen der Aufzugskabine überwacht, verwendet werden. Ein derartiger elektronischer Begrenzer betätigt im Bedarfsfall die Fangvorrichtung über eine elektromechanische Einrichtung. Beispielsweise kann auch die Sicherheit beim Ein- oder Aussteigen beziehungsweise Ein- oder Ausladen verbessert werden. Wenn sich beispielsweise die Aufzugskabine 6 auf dem Stockwerk 17A befindet, wie es in der Fig. 1 dargestellt ist, und die Kabinentür 18 sowie die Schachttür 17 geöffnet sind, dann kann es bei einem plötzlichen fehlerhaftem Wegrutschen der Aufzugskabine 6 nach oben mit einer positiven Geschwindigkeit v_{A} der Aufzugskabine 6 zu einem Unfall kommen. Um einen solchen Unfall zu verhindern, kann die Auslöseeinrichtung 4 die Fangvorrichtung 2 beispielsweise bereits nach einem vorbestimmten Fahrweg auslösen. Entsprechendes gilt auch für ein Wegrutschen nach unten.

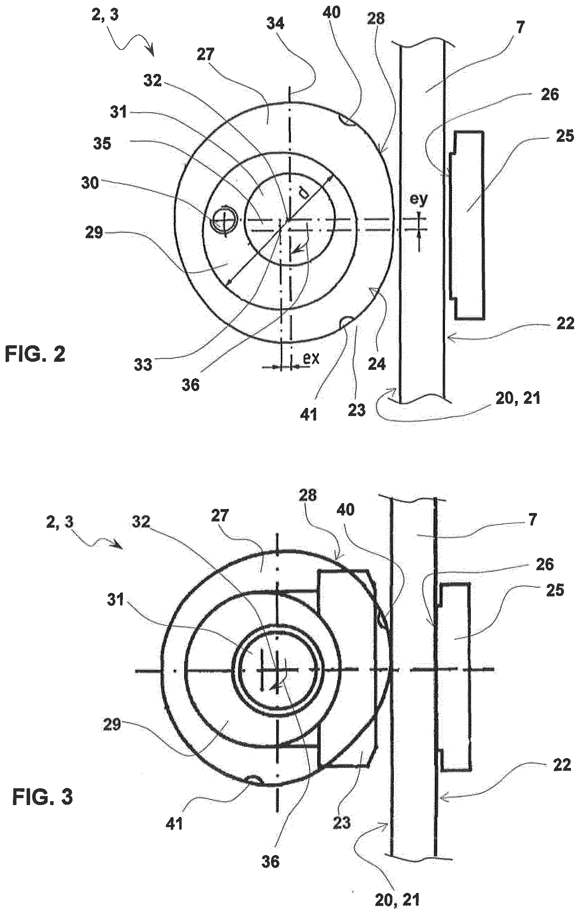

Fig. 2 zeigt die Bremseinheit 3 der Fangvorrichtung 2 und die Schiene 7 der in Fig. 1 dargestellten Aufzugsanlage 1 des ersten Ausführungsbeispiels in einer auszugsweisen, schematischen Darstellung im gelösten Zustand. An der Schiene 7 sind eine Abrollbahn 20 und eine Bremsbahn 21 vorgesehen, die sich zumindest teilweise überlappen. Hierbei können die Abrollbahn 20 und die Bremsbahn 21 auch ganz oder weitgehend übereinstimmen. Bei einer abgewandelten Ausgestaltung ist es ebenfalls denkbar, dass sich die Abrollbahn 20 und die Bremsbahn 21 voneinander unterscheiden und beispielsweise parallel zueinander erstrecken. Ferner ist an der Schiene 7 eine weitere Bremsbahn 22 vorgesehen.

Die Bremseinheit 3 weist eine Bremsbacke 23 mit einem Bremsbelag 24 auf. Ferner weist die Bremseinheit 3 eine weitere Bremsbacke 25 mit einem Bremsbelag 26 auf. Der Bremsbelag 24 der Bremsbacke 23 ist der Bremsbahn 21 zugeordnet. Der Bremsbelag 26 der weiteren Bremsbacke 25 ist der weiteren Bremsbahn 22 zugeordnet. In diesem Ausführungsbeispiel ist die weitere Bremsbacke 25 als passive Bremsbacke 25 ausgestaltet, während die Bremsbacke 23 als aktive Bremsbacke ausgestaltet ist.

Die Bremseinheit 3 weist eine Abrollscheibe 27 auf, an der ein eine Abrollkurve beziehungsweise ein Abrollelement 28 ausgestaltet ist. Ferner weist die Bremseinheit 3 einen Arbeitsexzenter 29 auf, der drehfest mit der Abrollscheibe 27 verbunden ist. Hierbei können die Abrollscheibe 27 und der Arbeitsexzenter 29 einstückig ausgeführt sein oder sie können aus mehreren Teilen zusammengesetzt sein. Der Verbund aus der Abrollscheibe 27 und dem Arbeitsexzenter 29 ist drehbar auf einer Achse 31 gelagert. Über ein Verbindungselement 30 beispielsweise einen Gewindeanschluss kann der Verbund aus Abrollscheibe 27 und Arbeitsexzenter 29 bedarfsweise verdreht werden.

In diesem Ausführungsbeispiel weist die Achse 31 eine Drehachse 32 auf. Der Arbeitsexzenter 29 weist bezüglich seines Durchmessers d eine Mittelachse 33 beziehungsweise einen Mittelpunkt 33 auf. Die Mittelachse 33 unterscheidet sich hierbei von der Drehachse 32. In diesem Ausführungsbeispiel ist die Mittelachse 33 des Arbeitsexzenters 29 um die vertikale Exzentrizität ey entlang der Abrollbahn 20 versetzt. Ferner ist die Mittelachse 33 bezüglich der Drehachse 32 um die horizontale Exzentrizität ex senkrecht von der Abrollbahn 20 weg versetzt. Für die Abrollscheibe 27 sind in diesem Ausführungsbeispiel Achsen 34, 35 angegeben, die senkrecht zueinander orientiert sind. Die Achse 34 ist eine vertikale Achse 34. Und die Achse 35 ist eine horizontale Achse 35. In diesem Ausführungsbeispiel sind das Abrollelement 28 und die Abrollscheibe 27 unsymmetrisch bezüglich der horizontalen Achse 35 ausgestaltet. Bei der horizontalen Achse 35 handelt es sich daher um eine horizontale Arbeitsachse 35. Hierdurch kann ein unterschiedliches Verhalten bei einem Fangen in Aufwärts- oder Abwärtsrichtung realisiert werden. Bei einer abgewandelten Ausgestaltung kann das Abrollelement 28 allerdings auch symmetrisch bezüglich der horizontalen Achse 35 ausgestaltet sein.

In diesem Ausführungsbeispiel gemäss Fig. 2 wird durch die Exzentrizität, die durch die vertikale Exzentrizität ey bedingt ist, ein asymmetrisches Verhalten beim Abrollen der Abrollscheibe 27 an der Abrollbahn 20 bezüglich eines Fangens der Aufzugskabine 6 bei einer Bewegung nach oben oder unten erzielt.

Wenn die Auslöseeinrichtung 4 die Fangvorrichtung 2 auslöst, dann wird der Verbund aus der Abrollscheibe 27 und dem Arbeitsexzenter 29 in oder entgegen einer Drehrichtung 36 um die Drehachse 32 verdreht. In diesem Ausführungsbeispiel wird eine Drehung in der Drehrichtung 36 betrachtet. Durch ein Auslösen in oder entgegen der Drehrichtung 36 kann sowohl ein Fangen der Aufzugskabine 6 bei ihrer Bewegung nach oben oder unten erfolgen.

Die Ausgestaltung und Funktionsweise der Bremseinheit 3 der Fangvorrichtung 2 entsprechend dem ersten Ausführungsbeispiel sind im Folgenden auch unter Bezugnahme auf die Fig. 3 weiter beschrieben.

Fig. 3 zeigt die in Fig. 2 dargestellte Bremseinheit 3 der Aufzugsanlage 1 gemäss dem ersten Ausführungsbeispiel in einer auszugsweisen, schematischen Darstellung während einer Auslösung der Fangvorrichtung 2. Durch die Auslösung der Fangvorrichtung 2 hat sich die Abrollscheibe 27 in der Drehrichtung 36 gedreht. Hierbei rollt die Abrollscheibe 27 mit ihrem Abrollelement 28 an der Abrollbahn 20 der Schiene 7 ab. Dadurch gelangt in diesem Ausführungsbeispiel zunächst die passive Bremsbacke 25 mit ihrem Bremsbelag 26 in Anlage an die weitere Bremsbahn 22 der Schiene 7. Hierfür können die passive Bremsbacke 25 und die Achse 31 beispielsweise auf einem gemeinsamen (nicht dargestellten) Rahmen gelagert sein. Hierbei ist auch eine elastische Lagerung für die passive Bremsbacke 25 realisierbar, bei der sich die passive Bremsbacke 25 beispielsweise über ein Federlager an solch einem Rahmen abstützt. Der Rahmen selbst kann dann gewissennassen schwimmend gelagert sein, so dass durch das Abrollen der Abrollscheibe 27 an der Abrollbahn 20 der Schiene 7 zunächst die Drehachse 32 von der Schiene 7 weggedrückt und über dem Rahmen die passive Bremsbacke 25 an die Schiene 7 herangeführt wird.

Beim weiteren Abrollen der Abrollscheibe 27 an der Abrollbahn 20 der Schiene 7 wird dann über den Arbeitsexzenter 29 auch die aktive Bremsbacke 23 an die Abrollbahn 20 der Schiene 7 angelegt. Die aktive Bremsbacke 23 und die passive Bremsbacke 25 wirken dann gegeneinander auf die Schiene 7 ein, so dass sich eine hohe Bremskraft entfaltet.

An der Abrollscheibe 27 beziehungsweise am Abrollelement 28 sind Markierungselemente 40, 41 angeordnet. Die Markierungselemente 40, 41 können in Bezug auf den jeweiligen Anwendungsfall auf geeignete Weise ausgestaltet sein. Das Markierungselement 40 erfüllt hierbei bei einem Drehen der Abrollscheibe 27 in der Drehrichtung 36 eine Markierungsfunktion, während das Markierungselement 41 bei einem Drehen der Abrollscheibe 27 entgegen der Drehrichtung 36 eine Markierungsfunktion erfüllt. Im Folgenden ist unter anderem die Markierungsfunktion des Markierungselements 40 beschrieben. Die Markierungsfunktion des Markierungselements 41 ergibt sich in entsprechender Weise.

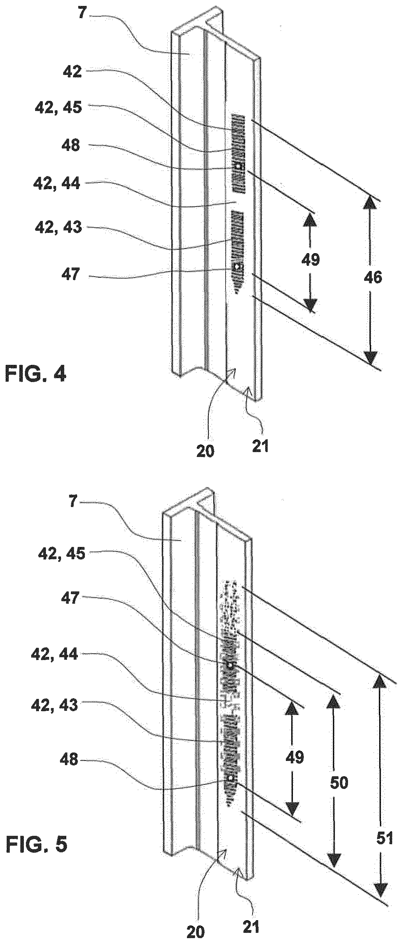

Fig. 4 zeigt die in Fig. 2 dargestellte Schiene 7 mit einem charakteristischen Rillenmuster 42, das bei einem Auslösen und anschliessendem Lösen der Fangvorrichtung 2 auf der Schiene 7 entsteht, in einer idealisierten Darstellung. Das Rillenmuster 42 weist hierbei Abschnitte 43, 44, 45 auf. Das Rillenmuster 42 ist hierbei in den Abschnitten 43, 45 durch ein Abrollen beziehungsweise Rückrollen der Abrollscheibe 27 und dem entsprechenden Abrollelement 28 auf der Abrollbahn 20 erzeugt. Da die Arbeitsscheibe 27 solange gedreht wird, bis die Bremsbacke 23 genügend stark an die Bremsbahn 21 angepresst wird, kann es abschnittsweise zu einem Gleiten oder Durchrutschen der Abrollscheibe 27 an der Abrollbahn 20 kommen. Durch solch ein Gleiten beziehungsweise Durchrutschen ist der Abschnitt 44 des Rillenmusters 42 gebildet, in dem ein Gleitkratzmuster auf der Bremsbahn 21 erkannt werden kann. Bei der Entstehung des Rillenmusters 42 ist das Abrollelement 28 bei der Auslösung daher nur abschnittsweise an der ortsfesten Abrollbahn 20 abgerollt.

Bei der idealisierten Darstellung des Rillenmusters 42, das in der Fig. 4 gezeigt ist, kann eine Länge 46 des Rillenmusters 42 gut erkannt und somit genau bestimmt werden.

Durch das Markierungselement 40 entstehen beim Anrollen eine Anfangsmarkierung 47 und beim Rückrollen eine Endmarkierung 48. Das Markierungselement 40 kann beispielsweise in Form einer Ausnehmung 40, insbesondere Bohrung 40, ausgestaltet sein, die an dem Abrollelement 28 vorgesehen ist. An den Markierungen 47, 48 ist somit eine Unterbrechung der Rillen des Rillenmusters 42 zu erkennen. Die Markierungen 47, 48 bilden somit Markierungsstellen 47, 48 auf der Abrollbahn 20. Der Abstand 49 zwischen diesen Markierungsstellen 47, 48 kann somit genau bestimmt werden. Der Abstand 49 ist ein Mass für die Länge 46 des Rillenmusters 42. Da die Länge 46 von dem Bremsweg abhängt, kann somit aus dem Abstand 49 auf den Bremsweg geschlossen werden.

Fig. 5 zeigt die in Fig. 2 dargestellte Schiene 7 mit dem charakteristischen Rillenmuster 42, das beim Auslösen und anschliessenden Lösen der Fangvorrichtung 2 auf der Schiene 7 entsteht, in einer schematischen, aber realitätsnäheren Darstellung. Die an die Bremsbahn 21 angelegte Bremsbacke 23 verwischt in der Praxis das Rillenmuster 42, das an der Abrollbahn 20 erzeugt wird. In der schematischen, aber realitätsnäheren Darstellung des Rillenmusters 42, wie es in der Fig. 5 gezeigt ist, kann somit im Unterschied zu der idealisierten Darstellung des Rillenmusters 42, wie es in der Fig. 4 gezeigt ist, die Länge 46 nicht mehr bestimmt werden. Längenbestimmungen, wie sie beispielsweise durch unterschiedliche Personen vorgenommen werden können, können dann beispielsweise einmal zur Bestimmung der Länge 50 und ein anderes Mal zur Bestimmung der Länge 51 führen. Da sich ein grosser Unterschied zwischen den Längen 50, 51 ergibt, ist die Längenbestimmung mit einer grossen Ungenauigkeit behaftet. Allerdings sind auch bei dem Rillenmuster 42, wie es in der Fig. 5 dargestellt ist, die Markierungsstellen 47, 48 deutlich zu erkennen. Der Abstand 49 kann daher auch in der Praxis mit einer hohen Genauigkeit bestimmt werden. Die Messung der gegebenenfalls nur mit einer grossen Ungenauigkeit zu bestimmende Länge 46 des Rillenmusters 42 kann somit entfallen. Der Bremsweg kann dann aus dem Abstand 49 zwischen den Markierungsstellen 47, 48 bestimmt werden.

Es ist anzumerken, dass das Abrollelement 28 auch an einer Transportrolle oder dergleichen ausgestaltet sein kann. Die Abrollscheibe 27, eine Transportrolle oder dergleichen, an der das Abrollelement 28 ausgestaltet ist, dient zum Anlegen und Anpressen des Bremsbelags 24 an die Bremsbahn 21. Zum Zurückstellen der Fangvorrichtung 2, werden die Abrollscheibe 27, eine Transportrolle oder dergleichen wiederum genutzt, um den Bremsbelag 24 zurück zu transportieren. Dieser Mechanismus wird in diesem Ausführungsbeispiel unter anderem auch durch den Arbeitsexzenter 29 realisiert. Das Verwischen des Rillenmusters 42 kann unter anderem auch beim Zurückstellen der Fangvorrichtung 2 erzeugt werden. Hierbei wird die Abrollscheibe 27 zusammen mit dem Arbeitsexzenter 29 wieder zurückgedreht und die Bremsbacke 23 wird entlastet. Hierdurch kann der in der Regel undeutliche Abdruck des Rillenmusters 42 entstehen. Dies betrifft in diesem Fall speziell den Abschnitt 45 des Rillenmusters 42. Je nach Ausgestaltung und Funktionsweise kann allerdings auch der Abschnitt 43 betroffen sein. In diesem Ausführungsbeispiel liegt die Anfangsmarkierung 47 in dem Abschnitt 43, während die Endmarkierung 48 in dem Abschnitt 45 liegt.

Die Anfangsmarkierung 47 und die Endmarkierung 48 können insbesondere in Form von Rechtecken, insbesondere Quadraten, in dem Rillenmuster 42 realisiert werden. Hierbei können die Markierungsstellen 47, 48 bei einer möglichen Ausgestaltung durch Unterbrechungen beziehungsweise Auslassungen der Rillen des Rillenmusters 42 realisiert sein. Dies ist durch eine entsprechende Ausnehmung, insbesondere Bohrung, an dem Abrollelement 28 der Abrollscheibe 27 realisierbar. Bei einer abgewandelten Ausgestaltung kann allerdings auch eine deutliche Vertiefung in der Abrollbahn 20 erzeugt werden, die jeweils die Markierungsstelle 47 beziehungsweise die Markierungsstelle 48 bildet. Hierbei können die Markierungsstellen 47, 48 als rechteckförmige, insbesondere quadratische, Vertiefungen in der Abrollbahn 20 ausgestaltet werden. Hierfür können an der Abrollscheibe 27 beziehungsweise dem Abrollelement 28 entsprechende Erhebungen vorgesehen sein, die die Markierungselemente 40, 41 bilden.

Somit ist in diesem Ausführungsbeispiel ein Markierungselement 40 vorgesehen, der beim Abrollen des Abrollelements 28 an der Abrollbahn 20 die Anfangsmarkierung 27 auf der Abrollbahn 20 erzeugt. Ferner erzeugt das Markierungselement 40 bei dem Rückrollen des Abrollelements 28, bei dem das Zusammenwirken des Bremsbelags 24 mit der ortsfesten Bremsbahn 21 aufgehoben wird, die Endmarkierung 48 auf der Abrollbahn 20. Das Markierungselement 40 erzeugt hierbei die Anfangsmarkierung 47 auf der Abrollbahn 20. Ferner erzeugt das Markierungselement 40 die Endmarkierung 48 als auf der Abrollbahn 20. Das Markierungselement 40 ist hierbei an dem Abrollelement 28 vorgesehen. Das Markierungselement 40 ist durch eine Aussparung 40 im Abrollelement 28 ausgestaltet. Allerdings kann das Markierungselement 40 beispielsweise auch durch eine Erhebung 40 in dem Abrollelement 28 ausgestaltet sein. Das Markierungselement 40 ist hierbei an einem Punkt des Abrollelements 28 angeordnet, bei dem aufgrund der Klemmung durch das Abrollelement 28 zur Abrollbahn 20 bereits eine erhebliche Pressung aufgebaut ist, so dass sich ein deutlicher Abdruck ergibt. Der Punkt des Abrollelements 28 bei dem das Markierungselement 40 angeordnet ist, wird aber in jedem Fall beim Betätigen der Bremseinheit überrollt, so dass er während dem eigentlichen Bremsen nicht mehr im Pressbereich zwischen Abrollelement 28 und Abrollbahn 20 ist. Damit wird eine deutlich sichtbare Markierung erzielt.

Die vorgängigen Erläuterungen beziehen sich auf eine Betätigung der Bremseinheit in Drehrichtung 36. Hierbei ist das Markierungselement 40 benutzt. Natürlich spielt sich bei umgekehrter Fahrrichtung derselbe Vorgang in umgekehrter Drehrichtung ab, wobei dann anstelle des Markierungselements 40 das Markierungselement 41 zum Einsatz gelangt.

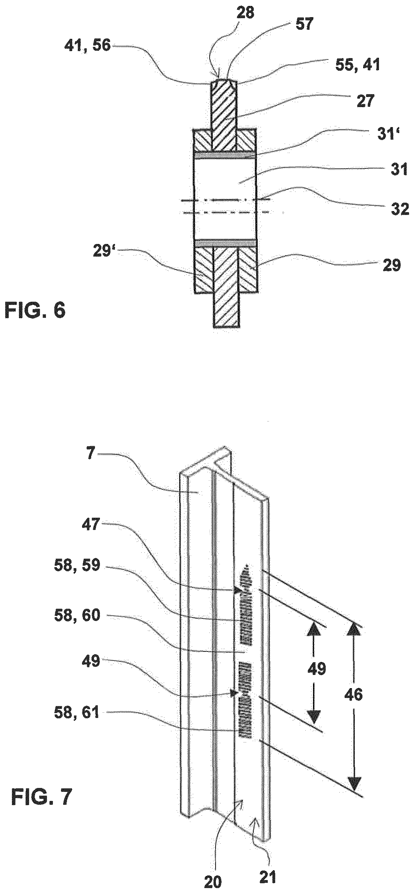

Fig. 6 zeigt die in Fig. 2 dargestellte Bremseinheit 3 in einer auszugsweisen, schematischen Darstellung entsprechend einem zweiten Ausführungsbeispiel. Hierbei sind die Abrollscheibe 27, der Arbeitsexzenter 29 sowie ein weiterer Arbeitsexzenter 29' dargestellt. Über die Arbeitsexzenter 29, 29' wird die aktive Bremsbacke 23 betätigt, die in entsprechender Weise unter anderem in der Fig. 2 dargestellt ist. Zur Vereinfachung der Darstellung ist die Bremsbacke 23 in der Fig. 6 nicht dargestellt.

Die Abrollscheibe 27 weist seitliche Aussparungen 55, 56 im Bereich ihres Abrollelements 28 auf. Zwischen den seitlichen Aussparungen 55, 56 ist ein verjüngter Abschnitt 57 an dem Abrollelement 28 gebildet. In diesem Ausführungsbeispiel sind die seitlichen Aussparungen 55, 56 als seitliche Kerben ausgestaltet. Der verjüngte Abschnitt 57 ist als stegförmiger Abschnitt 57 des Abrollelements 28 ausgestaltet. Durch die seitlichen Aussparungen 55, 56 ist ein Markierungselement 41 gebildet. Selbstverständlich sind in der Regel die beiden Markierungselemente 40, 41 identisch ausgeführt. Die Abrollscheibe 27 ist mit den beiden Arbeitsexzentern 29, 29' zusammengefügt und gemeinsam beispielsweise über Gleitlagerschalen 31' auf der Achse 31 gelagert.

Fig. 7 zeigt die in Fig. 2 dargestellte Schiene 7 mit einem charakteristischen Rillenmuster 58, das beim Auslösen und anschliessenden Lösen der Fangvorrichtung 2 gemäss dem zweiten Ausführungsbeispiel auf der Schiene 7 entsteht, in einer idealisierten Darstellung. In diesem Ausführungsbeispiel ist das Rillenmuster 58 in einer Form dargestellt, die sich beim Abrollen der Abrollscheibe 27 mit dem Abrollelement 28 an der Abrollbahn 20 entgegen der in Fig. 1 dargestellten Drehrichtung 36 ergibt. Das Rillenmuster 58 weist Abschnitte 59, 60, 61 auf. Das Rillenmuster 58 im Abschnitt 59 wird durch das Abrollen des Abrollelements 28 an der Abrollbahn 20 beim Auslösen der Fangvorrichtung 2 erzeugt. Wenn anschliessend die Bremsbacke 23 entsprechend fest gegen die Bremsbahn 21 gedrückt wird, dann kommt es zu einem gewissen Gleiten des Abrollelements 28 an der Abrollbahn 20. Dies erzeugt einen Gleitkratzer, wodurch der Abschnitt 60 des Rillenmusters 58 entsteht. Beim Lösen der Fangvorrichtung 2 erfolgt ein Rückrollen des Abrollelements 28 an der Abrollbahn 20, wodurch das Rillenmuster 58 im Abschnitt 61 erzeugt wird.

In der idealisierten Darstellung der Fig. 7 ist die Länge 46 des Rillenmusters 58 gut abzumessen und daher relativ genau bestimmbar.

Das Markierungselement 41 erzeugt in dem Rillenmuster 58 charakteristische Markierungen 47, 48 in Form von Markierungsstellen 47, 48. Hierbei wird die Anfangsmarkierung 47 in dem Abschnitt 59 des Rillenmusters 58 auf der Abrollbahn 20 erzeugt. Die Endmarkierung 48 wird auf dem Abschnitt 61 des Rillenmusters 58 auf der Abrollbahn 20 erzeugt. Zwischen der Anfangsmarkierung 47 und der Endmarkierung 48 ergibt sich ein Abstand 49, der genau bestimmt werden kann. In der idealisierten Darstellung eignen sich sowohl die Länge 46 als auch der Abstand 49 zur Bestimmung des Bremswegs.

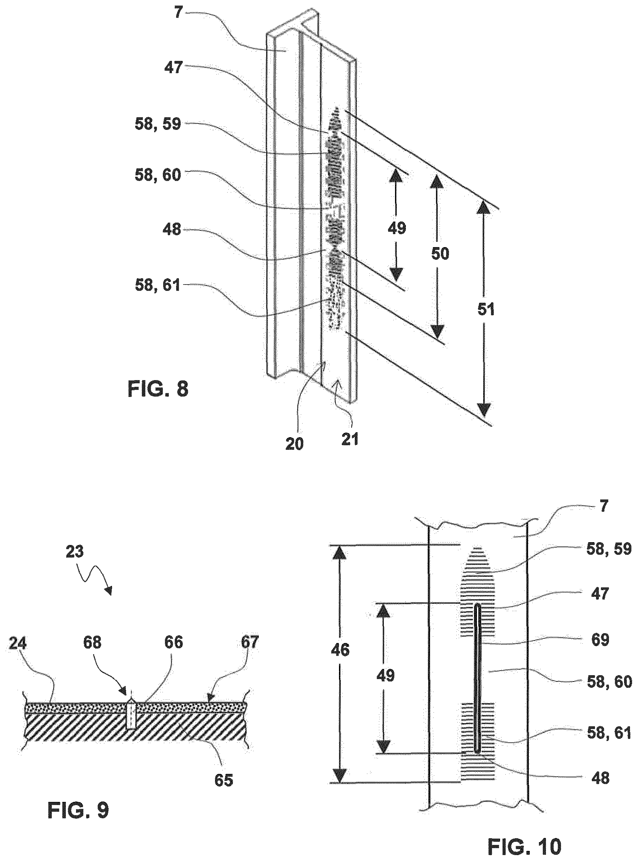

Fig. 8 zeigt die in Fig. 2 dargestellte Schiene 7 mit dem charakteristischen Rillenmuster 58, das beim Auslösen und anschliessenden Lösen der Fangvorrichtung 2 gemäss dem zweiten Ausführungsbeispiel auf der Schiene 7 entsteht, in einer schematischen, aber realitätsnäheren Darstellung. In der Praxis ergibt sich bei der Bestimmung des Bremswegs aus der Länge 46 (Fig. 7) das Problem, dass die Länge 46 des Rillenmusters 58 nur noch ungefähr beziehungsweise mit einer hohen Ungenauigkeit bestimmt werden kann. Durch das Verwischen des Rillenmusters 58, was durch das Zusammenwirken der Bremsbacke 23 mit der Schiene 7 erzeugt sein kann, ergibt sich ein vergleichsweise grosser Bereich für eine Bestimmung der Länge 46 des Rillenmusters 58. Dieser Bereich kann sich von einer minimalen Länge 50 bis zu einer maximalen Länge 51 erstrecken. Die Differenz zwischen der minimalen Längen 50 und der maximalen Länge 51 ist ein Mass für die Ungenauigkeit bei der Bestimmung der Länge 46, wie sie unter idealisierten Bedingungen vorliegt.

Die Markierungen 47, 48 können hingegen nicht nur bei idealisierten Bedingungen, wie sie in der Fig. 7 dargestellt sind, sondern auch in der Praxis gut erkannt werden, wie es bei der realitätsnäheren Darstellung entsprechend der Fig. 8 zu erkennen ist. Der Abstand 49 zwischen den Markierungen 47, 48 ist daher mit eine deutlich höheren Genauigkeit bestimmbar als die Länge 46 des Rillenmusters 58.

Somit ist der Bremsweg in der Praxis aus dem Abstand 49 beziehungsweise der entsprechenden Distanz zwischen den Markierungen 47, 48 mit einer deutlich grösseren Genauigkeit bestimmbar als es bei Zugrundelegung der Länge 46 des Rillenmusters 42 möglich ist.

Fig. 9 zeigt eine Bremsbacke 23 einer Bremseinheit 3 gemäss einem dritten Ausführungsbeispiel in einer auszugsweisen, schematischen Schnittdarstellung. In diesem Ausführungsbeispiel weist die Bremsbacke 23 einen Grundkörper 65 auf, auf den ein Bremsbelag 24 aufgebracht ist. Der Bremsbelag 24 kann als weichmetallischer Bremsbelag 24 ausgebildet sein. Ferner ist ein Markierungselement 66 vorgesehen, das aus einem hartmetallischen Werkstoff gebildet ist. Das Markierungselement 66 ist hierbei mit dem Grundkörper 65 verbunden oder einstückig mit dem Grundkörper 65 ausgestaltet. In diesem Ausführungsbeispiel erstreckt sich das Markierungselement 66 etwas über eine Oberfläche 67 des Bremsbelags 24. Das Markierungselement 66 weist eine Spitze 68 auf, die in diesem Ausführungsbeispiel als Kegelspitze 68 ausgebildet ist. Die Spitze 68 ist der Bremsbahn 21 der Schiene 7 zugewandt. Das Markierungselement 66 kann auch ganz oder teilweise aus einem keramischen Werkstoff gebildet sein.

Fig. 10 zeigt die in Fig. 2 dargestellte Schiene 7 mit einem charakteristischen Rillenmuster 58, das beim Auslösen und anschliessenden Lösen der Fangvorrichtung 2 gemäss dem dritten Ausführungsbeispiel auf der Schiene 7 entsteht, in einer idealisierten Darstellung. Die Abrollbahn 20 und die Bremsbahn 21 können ganz oder teilweise überlappen. Das Rillenmuster 58 wird durch das Zusammenwirken des Abrollelements 28 der Abrollscheibe 27 mit der Abrollbahn 20 an der Schiene 7 erzeugt. Durch das Anlegen der Bremsbacke 23 an die Bremsbahn 21 gelangt ausserdem die Spitze 68 an die Bremsbahn 21, so dass eine Markierungslinie 69 auf der Bremsbahn 21 erzeugt wird. Die Markierungslinie 69 erstreckt sich von einer Anfangsmarkierung 47 bis zu einer Endmarkierung 48.

In der idealisierten Darstellung ergibt sich eine Länge 46 des Rillenmusters 58. Durch das Zusammenwirken des Bremsbelags 24 mit der Schiene 7 wird das Rillenmuster 58 allerdings verwischt, wie es in entsprechender Weise anhand der Fig. 5 und 8 beschrieben ist. In der Praxis kann deshalb die Länge 46 nur ungenau bestimmt werden. Daher eignet sich die Länge 46 in der Regel nicht zur Bestimmung des Bremswegs. Allerdings kann der Abstand 49 zwischen der Anfangsmarkierung 47 und der Endmarkierung 48 vergleichsweise genau bestimmt werden. Der Abstand 49 ist in diesem Ausführungsbeispiel gleich der Länge 49 der Markierungslinie 69. Somit eignet sich der Abstand 49 zwischen den Markierungen 47, 48 beziehungsweise die Länge 49 der Markierungslinie 69 zur genauen Bestimmung des Bremswegs.

Bei einer abgewandelten Ausgestaltung kann das Markierungselement 66 in Form einer Spitze 68 auch an der Abrollscheibe 27 beziehungsweise am Abrollelement 28 vorgesehen sein. Je nach Ausgestaltung können die Anfangsmarkierung 47 und die Endmarkierung 48 somit auf der Abrollbahn 20 und/oder der Bremsbahn 21 erzeugt sein. Ferner ist es auch möglich, dass die Anfangsmarkierung 47 und die Endmarkierung 48 beziehungsweise die Markierungslinie 69 in entsprechender Weise an der weiteren Bremsbahn 22 erzeugt sind. Ausserdem kann die Markierungslinie 69 je nach konkreter Ausgestaltung auf der Abrollbahn 20 und/oder der Bremsbahn 21 sowie gegebenenfalls auf der weiteren Bremsbahn 22 erzeugt sein.

Bei einer weiteren Abwandlung ist es auch denkbar, dass ein Markierungselement 40, 41, 66 lösbar mit dem Abrollelement 28 oder dem jeweiligen Bremsbelag 24, 26 verbunden ist. Hierdurch können die Markierungen 47, 48 beziehungsweise die Markierungslinie 69 auch lediglich zum Zweck des Tests erzeugt werden, wobei hierbei gegebenenfalls ein Einfluss der Kennzeichnung (Markierung) auf das Bremsverhalten berücksichtigt werden muss. Dies ist speziell im Fall eines Markierungselements 66 mit einer Spitze 68 zu beachten, wenn dieses im Bremsbelag 24, 26 integriert ist und somit über die gesamte Bremsstrecke eine Markierungslinie 69 erzeugt.

Bei dem Verfahren zur Bestimmung eines Bremswegs der Bremseinheit 3 der Fangvorrichtung 2 werden folgende Schritte durchgeführt. Zunächst erfolgt ein Auslösen der Fangvorrichtung 2, beispielsweise bei einer Versuchsfahrt der Aufzugskabine 6, wobei das Abrollelement 28 der Abrollscheibe 27 zumindest abschnittsweise an der ortsfesten Abrollbahn 20 abrollt und wobei durch das Abrollen des Abrollelements 28 an der Abrollbahn 20 die Bremsbeläge 24, 26 mit den ortsfesten Bremsbahnen 21, 22 zusammen wirken. Ferner werden die Anfangsmarkierungen 47 sowie gegebenenfalls die Markierungslinie 69 und beim Rückstellen der Fangvorrichtung die Endmarkierung 48 auf der Abrollbahn 20 und/oder der Bremsbahn 21 beziehungsweise der Bremsbahn 22 beim Abrollen des Abrollelements 28 an der Abrollbahn 20 durch ein Markierungselement 40, 41, 66 erzeugt. Anschliessend kann der Abstand 49 zwischen der Anfangsmarkierung 47 und der Endmarkierung 48 beziehungsweise die Länge 49 das Markierungslinie 69 gemessen werden. Aus diesem direkten Abstand 49 beziehungsweise der Distanz oder Länge 49 kann dann auf geeignete Weise der Bremsweg bestimmt werden. Der diesbezügliche Zusammenhang kann beispielsweise durch eine mathematische Funktion oder eine Tabelle hinterlegt sein. Somit kann die autorisierte Person den Abstand 49 mit hoher Genauigkeit abmessen und daraus den Bremsweg mit entsprechend hoher Genauigkeit bestimmen.

Die Erfindung ist nicht auf die beschriebenen Ausführungsbeispiele und die genannten Abwandlungen beschränkt.

## Patentansprüche

1. Verfahren zur Bestimmung eines Bremswegs einer Aufzugskabine (6) einer Aufzugsanlage (1), der von einer Bremseinheit (3) einer Fangvorrichtung (2) verursacht wird, das folgende Schritte beinhaltet:
- Auslösen der Fangvorrichtung (2) der Aufzugskabine (6), wobei ein Abrollelement (28) zumindest abschnittsweise an einer ortsfesten Abrollbahn (20) abrollt, und
- Erzeugung zumindest einer Anfangsmarkierung (47) beim Abrollen des Abrollelements (28) an der Abrollbahn (20) mittels eines Markierungselements (40, 41,66).

2. Verfahren gemäss Anspruch 1, das folgende weitere Schritte beinhaltet:
- Rückstellen der Fangvorrichtung durch Bewegen der Aufzugskabine (6) in eine entgegengesetzte Rückstell-Fahrrichtung, wobei dabei das Abrollelement (28) zurückgerollt wird,
- Erzeugung zumindest einer Endmarkierung (48) beim Rückrollen des Abrollelements (28) durch das an dem Abrollelement (28) angeordnete Markierungselement (40, 41, 66),
- Ermitteln einer Distanz zwischen der Anfangsmarkierung (47) und der Endmarkierung (48), und
- Bestimmung des Bremswegs der Aufzugskabine (6) in Abhängigkeit der ermittelten Distanz (49).

3. Verfahren gemäss Anspruch 1 oder 2, wobei
die Anfangsmarkierung (47) oder die Endmarkierung (48), mittels dem am Abrollelement (28) angeordneten Markierungselement (40, 41, 66), beim Abrollen oder Rückrollen des Abrollelements (28) an der Abrollbahn (20), auf der Abrollbahn (20) und/oder einer Bremsbahn (21, 22) erzeugt wird.

4. Verfahren gemäss einem der Ansprüche 1 bis 3, wobei
mittels einer am Markierungselement (40, 41) vorhandener Signaleinrichtung eine der Anfangsmarkierung (47) und/oder der Endmarkierung (48) entsprechende Positionsinformation erzeugt wird, und
diese Positionsinformation in einem vorzugsweise elektronischen Positionsspeicher gespeichert oder zumindest angezeigt wird.

5. Verfahren gemäss Anspruch 4, wobei
der Bremsweg der Aufzugskabine aus einer Differenz zwischen der Positionsinformation der Anfangsmarkierung (47) und der Positionsinformation der Endmarkierung (48) berechnet wird.

6. Verfahren gemäss Anspruch 4 oder 5, wobei
die am Markierungselement (40, 41) vorhandene Signaleinrichtung mittels eines druckbasierten Signalgebers, vorzugsweise eines Piezoelements ausgeführt wird.

## Claims

1. Method for determining a braking slide of a lift cage (6) of a lift installation (1), which slide is caused by a brake unit (3) of a safety brake (2), the method comprising the following steps:
- triggering the safety brake (2) of the lift cage (6), wherein a rolling element (28) rolls at least partially along a stationary rolling track (20), and
- producing a start marking (47) by means of a marking element (40, 41, 66) during rolling of the rolling element (28) along the rolling track (20).

2. Method according to claim 1, comprising the following further steps:
- resetting the safety brake device by moving the lift cage (6) in an opposite resetting travel direction, wherein in that case the rolling element (28) is rolled back,
- generating at least one end marking (48) by the marking element (40, 41, 66) which is arranged at the rolling element (28), during rolling of the rolling element (28) back,
- determining a distance between the start marking (47) and the end marking (48) and
- determining the braking slide of the lift cage (6) in dependence on the determined distance (49).

3. Method according to claim 1 or 2, wherein the start marking (47) or the end marking (48) is produced on the rolling track (20) and/or a braking track (21, 22) by means of the marking element (40, 41, 66), which is arranged at the rolling element (28), during rolling out or rolling back of the rolling element (28) along the rolling track (20).

4. Method according to any one of claims 1 to 3, wherein positional information corresponding with the start marking (47) and/or the end marking (48) is produced by means of a signal device present at the marking element (40, 41) and this positional information is stored in a preferably electronic position memory or at least displayed.

5. Method according to claim 4, wherein the braking slide of the lift cage is calculated from a difference between the positional information of the start marking (47) and the positional information of the end marking (48).

6. Method according to claim 4 or 5, wherein the signal device present at the marking element (40, 41) is realised by means of a pressure-based signal transmitter, preferably a piezo-element.

## Revendications

1. Procédé pour définir une course de freinage d'une cabine d'ascenseur (6) d'une installation d'ascenseur (1), provoquée par une unité de freinage (3) d'un parachute (2), qui contient les étapes suivantes :
- déclenchement du parachute (2) de la cabine d'ascenseur (6), un élément de roulement (28) roulant au moins par zones sur une voie de roulement fixe (20), et
- production d'au moins un marquage initial (47), lors du roulement de l'élément de roulement (28) sur la voie de roulement (20), à l'aide d'un élément de marquage (40, 41, 66).

2. Procédé selon la revendication 1, qui contient les étapes supplémentaires suivantes :
- retour du parachute grâce au déplacement de la cabine d'ascenseur (6) dans un sens de déplacement de retour opposé, l'élément de roulement (28) étant ramené par roulement,
- production d'un marquage final (48) lors du retour de l'élément de roulement (28), grâce à l'élément de marquage (40, 41, 66) disposé sur ledit élément de roulement (28),
- détermination d'une distance entre le marquage initial (47) et le marquage final (48), et
- définition de la course de freinage de la cabine d'ascenseur (6) en fonction de la distance (49) déterminée.

3. Procédé selon la revendication 1 ou 2, selon lequel le marquage initial (47) ou le marquage final (48) est produit sur la voie de roulement (20) et/ou sur une voie de freinage (21, 22), à l'aide de l'élément de marquage (40, 41, 66) disposé sur l'élément de roulement (28), lors du roulement aller ou retour dudit élément de roulement (28) sur la voie de roulement (20).

4. Procédé selon l'une des revendications 1 à 3, selon lequel
à l'aide d'un dispositif de signalisation prévu sur l'élément de marquage est produite une information de position qui correspond au marquage initial (47) et/ou au marquage final (48), et
cette information de position est stockée dans une mémoire de position de préférence électronique, ou au moins affichée.

5. Procédé selon la revendication 4, selon lequel la course de freinage de la cabine d'ascenseur est calculée à partir d'une différence entre l'information de position du marquage initial (47) et l'information de position du marquage final (48).

6. Procédé selon la revendication 4 ou 5, selon lequel le dispositif de signalisation prévu sur l'élément de marquage (40, 41) est réalisé à l'aide d'un émetteur de signaux à base de pression, de préférence un élément piézoélectrique.
